# EUROPEAN PATENT APPLICATION

(11) **EP 3 683 561 A1**
(43) Date of publication of application: **22.07.2020**
(21) Application number: 20152288.5
(22) Date of filing: 16.01.2020
(51) Int. Cl.: G01M 15/10, F01N 13/00, F01N 3/021

(54) **EXHAUST GAS MEASURING DEVICE**

(30) Priority: 18.01.2019 CN 201910051230
(71) Applicant: Shanghai Volvo Car Research and Development Co., Ltd., Shanghai 201821 (CN)
(72) Inventor: LEI, Jie, SHANGHAI, Shanghai 201815 (CN); SIMONSSON, Lasse, 405 31 GÖTEBORG (SE); MOU, Bingheng, SHANGHAI, Shanghai 201815 (CN)
(74) Representative: Kransell & Wennborg KB

(57) **Abstract**

A switchable exhaust particulate counting system (100) configured for measuring the number of particulates contained in exhaust in an exhaust pipe (C) of an engine is disclosed, wherein the system (100) comprises: a switchable device (20) and a single particulate counting device (10) which is connected to the exhaust pipe (C) at a plurality of connecting positions of the exhaust pipe (C) via the switchable device (20), the switchable device (20) having an OFF state and a plurality of ON states, wherein, when the switchable device (20) is in one of the plurality of ON states, the fluid communication of the particulate counting device (10) to a corresponding connecting position of the plurality of connecting positions is allowed and exhaust at the corresponding connecting position is sampled and the number of particulates in the sampled exhaust is measured by the particulate counting device (10); and a heating device (30) for heating the switchable device (20), wherein the exhaust particulate number measured by the particulate counting device (10) is determined as an effective particulate number (N) at the corresponding connecting position when the switchable device (20) is heated to a preset temperature value or range. A method of using the system is also disclosed.

## Description

### Technical Field

This invention belongs to a field of an engine emission test and, in particular, relates to a switchable exhaust particulate counting system which is configured for selectively measuring the number of particulates in exhaust (or exhaust particulate number (PN)) at different positions of an exhaust pipe of an engine using a single particulate counting device. In case that a particulate filtering device is provided in the exhaust pipe, the switchable exhaust particulate counting system of this application can selectively measure the number of particulates in exhaust at positions upstream and downstream of the particulate filtering device using the same particulate counting device.

### Background

In today's world, certain countries over the world have adopted strict Emission Standards for Vehicle Exhaust Pollutants, such as the National V Emission Standard in which an exhaust PN is limited to 6E11 per km for light-duty vehicles. During an engine emission test, the exhaust PN is typically measured using a particulate counting device connected to an exhaust pipe of an engine, wherein the particulate counting device is fluidly communicated to the engine exhaust pipe at a position of the engine exhaust pipe by means of a sampling pipe, exhaust at this position in the engine exhaust pipe is sampled and delivered to the particulate counting device via the sampling pipe, and the exhaust PN is measured by the particulate counting device.

Generally, a particulate filtering device is provided in the engine exhaust pipe. It is desired to measure the exhaust PN both upstream and downstream of the particulate filtering device during the emission test, and the measured PN is used to estimate a particulate filtering property or efficiency of the particulate filtering device using the measurements. The measurements can also be used to adjust calibration or operation parameters of the engine in order to optimize the engine property with regard to the PN in raw exhaust discharged out of the engine.

However, if the exhaust PN both upstream and downstream of the particulate filtering device is measured with a single particulate counting device, the connection of the particulate counting device to the engine exhaust pipe needs to be switched between a connecting or sampling position forward or upstream of the particulate filtering device and a connecting or sampling position rearward or downstream of the particulate filtering device. In order to change the sampling position in the engine exhaust pipe, the sampling pipe needs to be operated manually so that the particulate counting device can sample the exhaust in the engine exhaust pipe alternately at the two connecting positions and counter the particulates in the exhaust accordingly. This process cannot be automated at present, and therefore the efficiency is low and the particulate PN at these two positions cannot be measured and monitored in real time.

In order to solve this problem, two particulate counting devices are used in some labs where the engine emission test is performed, and are connected to the engine exhaust pipe at the positions upstream and downstream of the particulate filtering device, respectively, to measure the exhaust PN at the two positions, respectively. However, different particulate counting devices have different inherent parameters and characteristics, which leads to measurement errors and unsatisfied measurement accuracies.

### Summary of the Invention

An object of the application is to selectively measure the number of particulates in exhaust at a plurality of positions of an exhaust pipe of an engine in real time with a single particulate counting device, and this object is achieved by providing a switchable device and a heating device for heating the switchable device.

To this end, in a first aspect, a switchable exhaust particulate counting system configured for measuring the number of particulates contained in exhaust in an exhaust pipe of an engine is provided, wherein the switchable exhaust particulate counting system comprises:
a switchable device and a single particulate counting device which is connected to the exhaust pipe at a plurality of connecting positions of the exhaust pipe via the switchable device, the switchable device having an OFF state and a plurality of ON states corresponding to the plurality of connecting positions, wherein, when the switchable device is in the OFF state, fluid communication of the particulate counting device to all of the connecting positions of the exhaust pipe is not allowed and the particulate counting device does not perform counting operation, and, when the switchable device is in one of the plurality of ON states, the fluid communication of the particulate counting device to a corresponding connecting position of the plurality of connecting positions is allowed and exhaust at the corresponding connecting position is sampled and the number of particulates in the sampled exhaust is measured by the particulate counting device; and
a heating device for heating the switchable device, wherein the exhaust particulate number measured by the particulate counting device is determined as an effective particulate number at the corresponding connecting position when the switchable device is heated to a preset temperature value or range.

In an embodiment, the switchable device is a three-way valve, the plurality of ON states include first and second ON states, and the plurality of connecting positions include a first position corresponding to the first ON state and a second position corresponding to the second ON state.

In an embodiment, the exhaust pipe is provided with a particulate filtering device, and the first position and the second position are upstream and downstream of the particulate filtering device, respectively.

In an embodiment, both the heating device and the particulate counting device are wrapped by a thermal insulation material.

In an embodiment, the heating device is an electric heating wire.

In an embodiment, the switchable exhaust particulate counting system further comprises a temperature measuring device configured for measuring a real time temperature of the switchable device, wherein the temperature measuring device comprises a sensor located on the switchable device.

In an embodiment, the switchable exhaust particulate counting system further comprises a display device and/or a storing device in communication with the temperature measuring device and the particulate counting device.

In an embodiment, the switchable device is switched manually.

In an embodiment, the switchable device is switched automatically by means of a control device, and the control device is in communication with the particulate counting device and the switchable device.

In an embodiment, the switchable exhaust particulate counting system further comprises a display device and/or a storing device, wherein the control device is in communication with the temperature measuring device, the particulate counting device, and the display device and/or the storing device

In a second aspect, a method of measuring the number of particulates in exhaust in an exhaust pipe of an engine using the switchable exhaust particulate counting system is provided, wherein the method comprises:
a) providing the system;
b) placing the switchable device in one of the plurality of ON states;
c) activating the heating device;
d) determining the exhaust particulate number measured by the particulate counting device as the effective particulate number at the corresponding connecting position of the exhaust pipe corresponding to the one of the plurality of ON states of the switchable device when the switchable device is heated to the preset temperature value or range; and
e) switching the state of the switchable device and repeating steps c) and d) for all other ON states of the plurality of ON states.

In an embodiment, the switchable device is switched manually or automatically.

In an embodiment, the method further comprises displaying and/or storing at least one of the following when the switchable device is heated to the preset temperature value or range: a real time temperature measured by a temperature measuring device of the system, the effective particulate number measured by the particulate counting device, the state of the switchable device, and the corresponding connection position which corresponds to the one of the plurality of ON states.

With the switchable exhaust particulate counting system provided with only one particulate counting device, the object of measuring the quantity of particulates in the exhaust at the plurality of positions of the engine exhaust pipe with the particulate counting device is achieved, the measurement errors caused by different inherent parameters of different particulate counting device used is avoided or minimized, and the cost is substantially reduced. By heating the switchable device, the measurement accuracy of the particulate counting device is improved and the requirements of a certain engine emission test are met.

### Brief Description of the Drawings

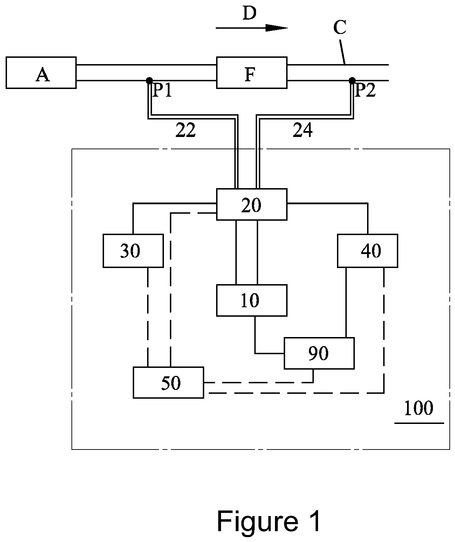

Figure 1 shows a block diagram of a switchable exhaust particulate counting system according to the application.

### Detailed Description of Preferred Embodiments

The basic principle of a switchable exhaust particulate counting system according to the application lies in that a particulate counting device is connected to an exhaust pipe of an engine at different positions of the exhaust pipe by means of a switchable device, and therefore an object of selectively measuring the number of particulates in exhaust at the different positions of the engine exhaust pipe with the same particulate counting device is achieved by switching the switchable device between different states. Moreover, a desired particulate counting accuracy can be obtained through heating the switchable device.

As shown in the block diagram of Figure 1, a switchable exhaust particulate counting system 100 according to the application is configured for measuring the number of particulates in an exhaust pipe, i.e. exhaust particulate number (PN), at positions P1 and P2 upstream and downstream of a particulate filtering device F which is provided in an exhaust pipe C of an engine A. In the context, the terms "upstream" and "downstream" are to be interpreted with reference to a flow direction D of the exhaust in the exhaust pipe C. Further, for convenience, sometimes "exhaust" can also be referred to as "gas" and they are interchangeable in this application.

In the embodiment of Figure 1, the switchable exhaust particulate counting system 100 comprises a particulate counting device 10 and a switchable device 20. The particulate counting device 10 is connected to the switchable device 20, and the switchable device 20 is connected to the exhaust pipe C, at the first position PI and the second position P2 upstream and downstream of the particulate filtering device F in the exhaust pipe C, via sampling pipes 22 and 24, respectively. In this way, according to states of the switchable device 20, the particulate counting device 10 can be selectively fluidly communicated to a corresponding position of the first and second positions PI and P2, so as to sample the exhaust at the corresponding position of the exhaust pipe C and then counter the particulates in the sampled exhaust. The particulate counting device 10 can be any suitable particulate counting device well known in the art, such as MEXA-2100-SPCS.

In addition, it should be noted that, throughout the description, the term "connect" or "connection" merely refers to "mechanically connect" or "mechanical connection", which means that fluid such as gas or exhaust can be permitted or inhibited to flow through, as required or desired. Instead, the term "fluid communication" or "fluidly communicated" used herein means that fluid can be allowed to flow through. In the context, the term "sampling position" is the position in the exhaust pipe C to which the particulate counting device 10 is fluidly communicated and is one of the "connection positions" at which the particulate counting device 10 is connected to the exhaust pipe C.

In this embodiment, exhaust can be sampled at the two positions of the exhaust pipe C, and in this condition the switchable device 20 is configured as a three-way valve, the three-way valve having an OFF state, a first ON state and a second ON state and being configured to be switched between the three states as desired. When the switchable device 20 is in the OFF state, the particulate counting device 10 is not in fluid communication (at the switchable device 20) with the exhaust pipe C at any position, and thus the particulate counting device 10 does not perform PN measurement operation and is in a non-operational state. When the switchable device 20 is in the first ON state, the particulate counting device 10 is in fluid communication with the exhaust pipe C at the upstream first position P1, the exhaust at this position can be sampled and the exhaust PN at this position can be measured, the measurement being referred to as an upstream PN. When the switchable device 20 is in the second ON state, the particulate counting device 10 is in fluid communication with the exhaust pipe C at the downstream second position P2, the exhaust at this position can be sampled and the exhaust PN at this position can be measured, the measurement being referred to as a downstream PN.

As described above, using the switchable exhaust particulate counting system 100 provided with the switchable device 20 which is configured as the three-way valve, the exhaust PN at both first and second positions P1 and P2 of the exhaust pipe C upstream and downstream of the particulate filtering device F can be measured with only one particulate counting device 10. Through switching the states of the switchable device 20 simply and quickly, the exhaust PN at different positions of the exhaust pipe can be measured in real time with the single particulate counting device. It can be understood by a skilled in the art that the invention is not limited to the two positions as above. Instead, by configuring or selecting the switchable device 20 suitably, the exhaust PN at more than two positions of the exhaust pipe C can be measured with the same particulate counting device 10. For example, the switchable device 20 can be configured as a four-way or five-way valve, and the exhaust PN at three or four positions of the exhaust pipe C can be measured by the particulate counting device 10.

As described above, the switchable exhaust particulate counting system 100 includes only one particulate counting device 10, and therefore the measurement errors caused by different inherent parameters of different particulate counting devices is solved and the related cost is reduced.

The upstream PN and the downstream PN measured by the particulate counting device 10 when the switchable device 20 is in different states can be used to obtain the filtering efficiency of the particulate filtering device F in the engine exhaust pipe C. Moreover, these measurements can also be used by a calibration operator of the engine to adjust calibration or operation parameters of the engine, so as to adjust and optimize the raw emission of the engine so that the exhaust PN downstream of the particulate filtering device F meets requirements of a certain emission standard.

However, it has been found through experiments performed using the claimed and described invention that the exhaust in the engine exhaust pipe C has an initially high emission temperature, and has a reduced temperature after passing through the sampling pipe 22 or 24 and the switchable device 20 which is configured as the three-way valve, because condensation and crystallization occur for a portion of particulates in the exhaust. As a result, that the exhaust PN measured by particulate counting device 10 is less than the actual number of the particulates in the exhaust by up to 20-50%. In this regard, the switchable exhaust particulate counting system 100 is further provided with a heating device 30 for heating the switchable device 20 and a temperature measuring device 40 for measuring a real-time temperature of the switchable device 20.

In particular, the heating device 30 can be configured as an electric heating wire or element. As an addition or alternative, the heating device 30 can also be configured as or further comprise any other suitable heating device well known in the art. Both the switchable device 20 and the heating device 30 for heating the switchable device 20 are wrapped by a thermal insulation material which provides a thermal insulation or temperature maintenance function for the switchable device 20. The temperature measuring device 40 can be configured as a temperature sensor provided on the switchable device 20 for measuring its real time temperature, and the temperature sensor can be any suitable sensor well known in the art. In a preferred embodiment, the system 100 can further comprise a display device for displaying the real time temperature to a user, and preferably can comprise a storing device for storing the measured real time temperature so that data statistics and analysis may be performed by the user in the future. In Figure 1, the display device and the storing device are commonly denoted collectively by reference number 90.

The invention has many benefits, including the fact that measurements from the particulate counting device 10 have an improved accuracy if the switchable device 20 is heated to a temperature range between 170-200 Celsius degrees. More preferably, the temperature range can be between 180-200 Celsius degrees, and most preferably can be between 190-195 Celsius degrees.

In some preferred embodiments, the display device and the storing device 90 can be communicated to and with the particulate counting device 10. When the real time temperature of the switchable device 20 measured by the temperature measuring device 40 reaches a preset threshold temperature value or range, the exhaust PN measured by the particulate counting device 10 is referred to as an effective PN in the exhaust at the corresponding sampling position of the exhaust pipe C. The real time temperature and the effective PN can be displayed on the display device and can be stored in the storing device.

According to the application, the switchable device 20 can be switched manually or automatically.

With regard to manual switch of the switchable device 20, according to actual demands, the switchable device 20 can be placed in the OFF state manually if the non- operational state of the particulate counting device 10 is expected. If the particulate counting device 10 is expected to measure the exhaust PN at the first position PI or the second position P2 of the exhaust pipe C, the operator places the switchable device 20 in the corresponding first or second ON state manually, and activates the switchable device 20 manually. The exhaust PN can be read from the particulate counting device 10 when the real time temperature of the switchable device 20 measured by the temperature measuring device 40 reaches the preset threshold temperature value or range.

The system 100 according to the application can further be configured with a control device 50 for controlling automatic switch of the switchable device 20. In Figure 1, dashed lines are used to indicate communications between the control device 50 and other devices. The control device 50 can be communicated to and with the switchable device 20, the heating device 30 and the temperature measuring device 40. According to a preset operation program, the control device 50 can, automatically, place the switchable device 20 in one of the first and second ON states, activate the heating device 30 to heat the switchable device 20, monitors the real time temperature measured by the temperature measuring device 40, and determine the exhaust PN measured by the particulate counting device 10 as the effective PN in exhaust when the real time temperature measured by the temperature measuring device 40 reaches the preset threshold temperature value or range.

The control device 50 can be further configured to be communicated to the display device and the storing device so that one or more of the following can be displayed and/or stored automatically when the real time temperature measured by the temperature measuring device 40 reaches the preset temperature value or range: the state of the switchable device 20, the sampling position (PI or P2), the real time temperature measured by the temperature measuring device 40, and the effective PN measured by the particulate counting device 10.

According to the principle of the application, the control device 50 can be designed to be dedicated to the switchable exhaust particulate counting system, or can be integrated into a control unit of the engine. The display device and the storing device can be any suitable display and memory in the art, and they can be dedicated to the system 100 or can be configured as a display device and memory device shared with other functional systems of the engine.

Taking the embodiment shown in Figure 1 as an example, a method of using the switchable exhaust particulate counting system according to the application includes the steps of: a) providing the system 100 described as above; b) placing the switchable device 20 in one of the first and second ON states; c) activating the heating device 30 and monitoring the real time temperature of the switchable device 20 measured by the temperature measuring device 40; and d) when the real time temperature reaches the preset temperature value or range, determining the exhaust PN measured by the particulate counting device 10 as the effective PN in the exhaust at the corresponding sampling position of the exhaust pipe C and corresponding to the ON state of the switchable device 20. Preferably, the method further includes the steps of: placing the switchable device 20 in the other one of the first and second ON states; activating the heating device 30 and monitoring the real time temperature of the switchable device 20 measured by the temperature measuring device 40; and, when the real time temperature reaches the preset temperature value or range, determining the exhaust PN measured by the particulate counting device 10 as the effective PN in the exhaust at the corresponding sampling position of the exhaust pipe C which corresponds to the ON state of the switchable device 20.

Preferably, the method can further include, for each of the ON states of the switchable device 20, displaying and/or storing at least one of the following when the real time temperature measured by the temperature measuring device 40 reaches the preset temperature value or range: the real time temperature measured by the temperature measuring device 40, the effective PN in the exhaust measured by the particulate counting device 10, the state of the switchable device 20, and the sampling position of the exhaust pipe C.

Through providing the switchable exhaust particulate counting system according to the application with the switchable device, the object of measuring the exhaust PN at a plurality of positions, such as two positions, of the engine exhaust pipe using the single particulate counting device is achieved, which avoids the measurement errors caused by different inherent parameters of different particulate counting devices used and substantially reduces the cost. By heating the switchable device, the measurement accuracy of the particulate counting device is improved, and the requirements of the engine emission test are met.

Preferred embodiments according to the principle of the application are described as above. It should be appreciated by a person of ordinary skill in the art that the protecting scope of the application is not limited to the embodiments described, claimed and/or shown in the drawings. Various modifications and variants can be made by a person of ordinary skill in the art to the embodiments of this invention without departing from the scope, spirit and range of the application defined by the following claims.

## Claims

1. A switchable exhaust particulate counting system (100) configured for measuring the number of particulates contained in exhaust in an exhaust pipe (C) of an engine, wherein the switchable exhaust particulate counting system (100) comprises:
a switchable device (20) and a single particulate counting device (10) which is connected to the exhaust pipe (C) at a plurality of connecting positions of the exhaust pipe (C) via the switchable device (20), the switchable device (20) having an OFF state and a plurality of ON states corresponding to the plurality of connecting positions, wherein, when the switchable device (20) is in the OFF state, fluid communication of the particulate counting device (10) to all of the connecting positions of the exhaust pipe (C) is not allowed and the particulate counting device (10) does not perform counting operation, and, when the switchable device (20) is in one of the plurality of ON states, the fluid communication of the particulate counting device (10) to a corresponding connecting position of the plurality of connecting positions is allowed and exhaust at the corresponding connecting position is sampled and the number of particulates in the sampled exhaust is measured by the particulate counting device (10); and
a heating device (30) for heating the switchable device (20), wherein the exhaust particulate number measured by the particulate counting device (10) is determined as an effective particulate number (N) at the corresponding connecting position when the switchable device (20) is heated to a preset temperature value or range.

2. The switchable exhaust particulate counting system (100) according to claim 1, wherein the switchable device (20) is a three-way valve, the plurality of ON states include first and second ON states, and the plurality of connecting positions include a first position (PI) corresponding to the first ON state and a second position (P2) corresponding to the second ON state.

3. The switchable exhaust particulate counting system (100) according to claim 2, wherein the exhaust pipe (C) is provided with a particulate filtering device (F), and the first position (PI) and the second position (P2) are upstream and downstream of the particulate filtering device (F), respectively.

4. The switchable exhaust particulate counting system (100) according to claim 3, wherein both the heating device (30) and the particulate counting device (10) are wrapped by a thermal insulation material.

5. The switchable exhaust particulate counting system (100) according to claim 4, wherein the heating device (30) is an electric heating wire.

6. The switchable exhaust particulate counting system (100) according to claim 5, further comprising a temperature measuring device (40) configured for measuring a real time temperature of the switchable device (20), wherein the temperature measuring device (40) comprises a sensor located on the switchable device (20).

7. The switchable exhaust particulate counting system (100) according to claim 6, further comprising a display device and/or a storing device in communication with the temperature measuring device (40) and the particulate counting device (10).

8. The switchable exhaust particulate counting system (100) according to any one of claims 1-7, wherein the switchable device (20) is switched manually.

9. The switchable exhaust particulate counting system (100) according to any one of claims 1-6, wherein the switchable device (20) is switched automatically by means of a control device (50), and the control device is in communication with the particulate counting device (10) and the switchable device (20).

10. The switchable exhaust particulate counting system (100) according to claim 9, further comprising a display device and/or a storing device, wherein the control device (50) is in communication with the temperature measuring device (40), the particulate counting device (10), and the display device and/or the storing device.

11. A method of measuring the number of particulates in exhaust in an exhaust pipe (C) of an engine using a switchable exhaust particulate counting system according to any one of claims 1-10, wherein the method comprises:
a) providing the system (100);
b) placing the switchable device (20) in one of the plurality of ON states;
c) activating the heating device (30);
d) determining the exhaust particulate number measured by the particulate counting device (10) as the effective particulate number (N) at the corresponding connecting position of the exhaust pipe (C) which corresponds to the one of the plurality of ON states of the switchable device (20) when the switchable device (20) is heated to the preset temperature value or range; and
e) switching the state of the switchable device (20) and repeating steps c) and d) for all other ON states of the plurality of ON states.

12. The method according to claim 11, wherein the switchable device (20) is switched manually or automatically.

13. The method according to claim 11 or 12, further comprising displaying and/or storing at least one of the following when the switchable device (20) is heated to the preset temperature value or range: a real time temperature measured by a temperature measuring device (40) of the system (100), the effective PN measured by the particulate counting device (10), the state of the switchable device (20), and the corresponding connection position corresponding to the one of the plurality of ON states.
